# EUROPÄISCHE PATENTSCHRIFT

(11) **EP 1 178 896 B1**
(45) Veröffentlichungstag und Bekanntmachung des Hinweises auf die Patenterteilung: **10.11.2004**
(21) Anmeldenummer: 00926966.3
(22) Anmeldetag: 17.04.2000
(51) Int. Cl.: B60K 35/00, G07C 5/08

(54) **ANZEIGEVERFAHREN UND ANZEIGEEINRICHTUNG ZUR ANZEIGE VON ZUSTANDSINFORMATIONEN**
INDICATION METHOD AND INDICATOR DEVICE FOR INDICATING STATUS INFORMATION
PROCEDE ET DISPOSITIF POUR AFFICHER DES INFORMATIONS D'ETAT

(30) Priorität: 12.05.1999 DE 19922001
(43) Veröffentlichungstag der Anmeldung: 13.02.2002
(73) Patentinhaber: Volkswagen Aktiengesellschaft, 38436 Wolfsburg (DE)
(72) Erfinder: CRULL, Torsten, D-38106 Braunschweig (DE); KIESEWETTER, Thomas, D-38118 Brauschweig (DE); HEIMERMANN, Matthias, D-38302 Wolfenbüttel (DE)
(86) Internationale Anmeldenummer: PCT/EP2000/003457
(87) Internationale Veröffentlichungsnummer: WO 2000/069666

(56) Entgegenhaltungen:
- DE-A- 3 221 398
- DE-A- 4 140 864
- US-A- 4 658 371

## Beschreibung

Die Erfindung betrifft ein Anzeigeverfahren mit einer Anzeigeeinrichtung für Kraftfahrzeuge gemäß Oberbegriff des Anspruchs 1 sowie eine Anzeigeeinrichtung zur Durchführung des Anzeigeverfahrens.

In Kraftfahrzeugen werden Anzeigeeinrichtungen verwendet, mit denen dem Fahrer wichtige Hinweise gegeben werden können, wie beispielsweise, daß sich im Kraftstofftank nur noch eine Restreservemenge befindet und deshalb getankt werden sollte. Eine solche Hinweisanzeige kann beispielsweise dann ausgelöst werden, wenn der Tankinhalt auf einen Grenzwert von 8 Litern abgesunken ist. Ein Sensor kann das Erreichen dieses Grenzwertes feststellen und über den Bordcomputer des Kraftfahrzeugs das Aufleuchten einer Reserveanzeige veranlassen.

Ein Verfahren zur Anzeige von mehreren unterschiedlichen Informationen an einem Display einer Anzeigeeinrichtung ist aus der WO 96/27510 bekannt. Bei Erreichen eines Zustandsgrenzwertes, beispielsweise bei Erreichen einer vorgegebenen Reservemenge an Kraftstoff, wird dies mittels eines entsprechenden Symbols angezeigt. Der Fahrer des Kraftfahrzeugs hat nun die Möglichkeit, die Darstellung, insbesondere die Symbolgröße, der Hinweisanzeige zu verändern. Es besteht aber auch die Möglichkeit, anstelle eines Symbols einen beschreibenden Text als Hinweisanzeige auszuwählen.

Aus der US-PS 4 072 924 ist ein Anzeigesystem bekannt, mit dessen Hilfe unterschiedliche Hinweisanzeigen auswählbar sind. Wird eine der Hinweisanzeigen ausgewählt, so kann der Fahrer des Kraftfahrzeugs lediglich feststellen, daß momentan beispielsweise eine Fehlfunktion oder eine Überschreitung eines kritischen Grenzwertes vorliegt und daß entsprechende Maßnahmen zur Behebung dieses Zustands zu ergreifen sind.

Ein Anzeigeverfahren und eine Anzeigevorrichtung mit den Merkmalen des Oberbegriffs des Ansprüche 1 und 7 sind bekannt aus US-A-4 658 371.

Der Erfindung liegt die Aufgabe zugrunde, ein Anzeigeverfahren mit einer Anzeigeeinrichtung für Kraftfahrzeuge zu schaffen, welches für den Fahrer eine möglichst aussagekräftige Hinweisanzeige aktiviert, wenn an Einrichtungen im Kraftfahrzeug kritische Zustandsgrenzwerte auftreten.

Die Lösung dieser Aufgabe erhält man durch die im Anspruch 1 angegebenen Merkmale. Zum Zeitpunkt des Erreichens eines Zustandsgrenzwertes wird eine der Hinweisanzeige zugeordnete Information zusammen mit dem Kilometerstand gespeichert und bei Bedarf angezeigt. Der Fahrer eines Kraftfahrzeugs kann somit jederzeit feststellen, bei welchem Kilometerstand ein kritischer Zustandsgrenzwert erreicht bzw. überschritten oder unterschritten wurde. Als zusätzliche Informationen können beispielsweise auch die zwischenzeitlich gefahrenen Kilometer angezeigt werden. Handelt es sich bei der Hinweisanzeige um einen Hinweis auf das Erreichen der Tankreserve, so kann der Fahrer anhand der gefahrenen Kilometer seit dem Erreichen des entsprechenden Zustandsgrenzwertes erkennen, wie dringlich das Auftanken des Fahrzeugs ist.

Als weitere Informationen kann der Zeitpunkt (Uhrzeit, Datum) des Erreichens eines Zustandsgrenzwertes mit der zugehörigen Hinweisanzeige gespeichert und bei Bedarf angezeigt werden. Auf diese Weise läßt sich ein Fahrzeug-Logbuch realisieren, welches zu unterschiedlichen, fahrzeugrelevanten Ereignissen Informationen speichert, die sofort und bei Bedarf auch zu einem späteren Zeitpunkt abgerufen werden können. Aus den gespeicherten Informationen können auch über ein Diagnosesystem automatische Auswertungen angefertigt werden, die für Servicearbeiten nützlich sein können.

Besonders vorteilhaft ist es, wenn das Anzeigeverfahren eine zusätzliche Information vorsieht, die konkret auf eine erforderliche Reparatur oder auf sonstige Abhilfemaßnahmen hinweist. Wird eine solche Abhilfemaßnahme durchgeführt, kann das Datum und/oder der Kilometerstand der Abhilfemaßnahme gespeichert werden. Man erhält somit eine chronologische Aufstellung der Hinweisanzeigen mit den zusätzlichen Informationen über einen längeren Zeitraum.

Der Erfindung liegt außerdem die Aufgabe zugrunde, eine Anzeigeeinrichtung zur Durchführung des erfindungsgemäßen Verfahrens zu schaffen.

Die Lösung dieser Aufgabe erhält man durch die im Anspruch 7 aufgeführten Merkmale. Die Anzeigeeinrichtung besitzt eine Überwachungseinrichtung mit mehreren Sensoren, die mit einem Datenspeicher verbunden ist, der bei Erreichen eines Zustandsgrenzwertes den aktuellen Kilometerstand zugeordnet zu der zugehörenden Hinweisanzeige speichert. Anhand des abgespeicherten Kilometerstands kann ein Prozessor zu einen späteren Zeitpunkt die gefahrenen Kilometer ermitteln und diese zusammen mit der Hinweisanzeige zur Anzeige bringen.

Im Datenspeicher können außerdem zum Zeitpunkt des Erreichens eines Zustandsgrenzwertes weitere, charakteristische Daten gespeichert werden, die dann zu jedem späteren Zeitpunkt zusammen mit der entsprechenden Hinweisanzeige an einem Display oder einem sonstigen Sichtschirm dargestellt werden können.

Die im Datenspeicher gespeicherten Daten können zugeordnet zu der jeweiligen Hinweisanzeige auch einem externen Diagnosesystem zugeführt werden, welches eine Auswertung der Daten automatisch vornehmen kann.

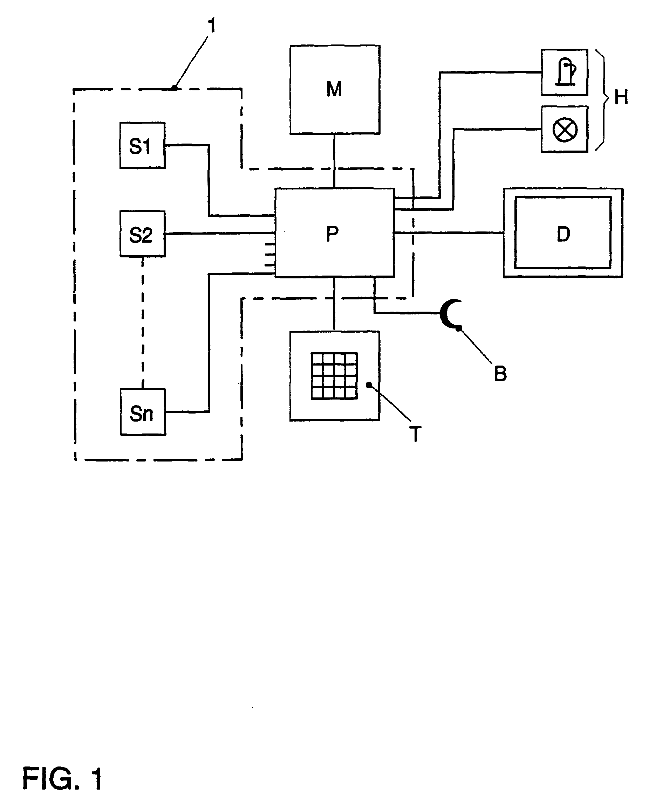

Die Erfindung wird nachfolgend anhand eines in der Zeichnung dargestellten Ausführungsbeispiels näher erläutert. Das Ausführungsbeispiel zeigt das Blockschaltbild der Anzeigeeinrichtung, die eine Überwachungseinrichtung 1 mit einem Prozessor P und mehreren Sensoren S1 bis Sn beinhaltet. Der Prozessor P kann als Bordcomputer realisiert sein, der mit einer Tastatur T, einem Display D, einem Datenspeicher M und mit zusätzlichen optischen Hinweisanzeigen H verbunden ist.

Bei dem Display D kann es sich um eine Flüssigkristallanzeige handeln, an der in Form einer Tabelle zu unterschiedlichen Hinweisanzeigen Informationen und weitere Daten dargestellt werden können. Eine solche Tabelle kann die folgende Form haben:

| **Information** | **Datum** | **Km-Stand** | **Abhilfe** |
|---|---|---|---|
| Bremsenverschleiß | 03.12.98 | 39724 | ja |
| Tank: Reserve | 05.12.98 | 39980 | ja |
| Bremslicht defekt | 06.12.98 | 39996 | ja |
| | | | |

Der Sensor S1 überwacht beispielsweise die Bremsbelagstärke und meldet bei Erreichen einer Mindeststärke dies an dem Prozessor P, worauf eine Hinweisanzeige H in Form eines beleuchteten Symbols erfolgt. Außerdem speichert der Prozessor P in den Datenspeicher M den Kilometerstand und das aktuelle Datum gegebenenfalls mit Uhrzeit ab. Werden noch weitere Zustandsgrenzwerte erreicht, so werden entsprechende Hinweisanzeigen ausgelöst und entsprechende Daten in den Datenspeicher M übertragen. Die oben dargestellte Tabelle zeigt drei Beispiele für zusätzliche Informationen und Daten, die in Kombination mit Hinweisanzeigen gespeichert werden können.

In der Tabelle ist außerdem eine Rubrik mit der Bezeichnung "Abhilfe" aufgeführt, worin vermerkt werden kann, ob ein gemeldeter kritischer Zustand bereits wieder beseitigt worden ist. Es könnte dort auch angegeben werden, ob sofort Abhilfe erfolgen sollte oder ob eine Abhilfe bei einem späteren Werkstattbesuch noch ausreichend ist.

Die dargestellte Tabelle zeigt die wichtigsten zusätzlichen Informationen und Daten in Verbindung mit den symbolhaften Hinweisanzeigen, die bei Erreichen von Zustandsgrenzwerten einander zugeordnet abgespeichert werden. Die dargestellte Tabelle könnte insbesondere auch noch die seit dem Aktivieren einer Hinweisanzeige gefahrenen Kilometer anzeigen. Die in Form der Tabelle dargestellten Informationen und Daten lassen sich über eine Buchse B, die mit dem Prozessor P verbunden ist, an ein hier nicht dargestelltes Diagnosesystem übertragen, wo eine automatische Auswertung vorgenommen werden kann.

### BEZUGSZEICHENLISTE

- 1: Überwachungseinrichtung
- P: Prozessor
- S1 bis Sn: Sensoren
- T: Tastatur
- D: Display
- M: Datenspeicher
- H: Hinweisanzeige
- B: Buchse

## Patentansprüche

1. Anzeigeverfahren mit einer Anzeigeeinrichtung für Kraftfahrzeuge, die Informationen über den Zustand unterschiedlicher Einrichtungen des Kraftfahrzeugs anzeigt, wobei bei Erreichen von Zustandsgrenzwerten eine Hinweisanzeige (H) erfolgt,
**dadurch gekennzeichnet, daß**
zum Zeitpunkt des Erreichens eines Zustandsgrenzwertes eine der Hinweisanzeige (H) zugeordnete Information zusammen mit dem Kilometerstand gespeichert und bei Bedarf angezeigt wird.

2. Anzeigeverfahren nach Anspruch 1,
**dadurch gekennzeichnet, daß**
der Zeitpunkt (Uhrzeit, Datum) des Erreichens eines Zustandsgrenzwertes zu der zugehörigen Hinweisanzeige (H) gespeichert und bei Bedarf angezeigt wird.

3. Anzeigeverfahren nach einem der Ansprüche 1 oder 2,
**dadurch gekennzeichnet, daß**
die seit dem Erreichen eines Zustandsgrenzwertes gefahrenen Kilometer angezeigt werden.

4. Anzeigeverfahren nach einem der vorhergehenden Ansprüche,
**dadurch gekennzeichnet, daß**
als Zustandsgrenzwerte ein Bremsbelaggrenzwert und/oder ein Tank-Reservewert und/oder ein Minimalwert für den Stromverbrauch von elektrischen Verbrauchern überwacht werden.

5. Anzeigeverfahren nach einem der vorhergehenden Ansprüche,
**dadurch gekennzeichnet, daß**
zu der Hinweisanzeige (H) eine Information gegeben wird, die auf eine erforderliche Reparatur oder sonstige Abhilfemaßnahme hinweist.

6. Anzeigeverfahren nach einem der vorhergehenden Ansprüche,
**dadurch gekennzeichnet, daß**
zu einer auf eine Hinweisanzeige (H) vorgenommene Abhilfemaßnahme der Zeitpunkt und/oder der Kilometerstand festgehalten werden.

7. Anzeigeeinrichtung zur Durchführung des Verfahrens nach einem der vorhergehenden Ansprüche, mit einer Überwachungseinrichtung (1), die mittels Sensoren (S1 bis Sn) die Zustände unterschiedlicher Einrichtungen überwacht und das Erreichen von Zustandsgrenzwerten in Form einer entsprechenden Hinweisanzeige (H) anzeigt, **dadurch gekennzeichnet, daß**
die Überwachungseinrichtung (1) mit einem Datenspeicher (M) verbunden ist, der bei Erreichen eines Zustandsgrenzwertes den aktuellen Kilometerstand zugeordnet zu der Hinweisanzeige (H) speichert.

8. Anzeigeeinrichtung nach Anspruch 7,
**dadurch gekennzeichnet, daß**
der Datenspeicher (M) zugeordnet zu der Hinweisanzeige (H) weitere zum Zeitpunkt des Erreichens des Zustandsgrenzwertes vorhandene charakteristische Daten speichert.

9. Anzeigeeinrichtung nach einem der Ansprüche 7 oder 8,
**dadurch gekennzeichnet, daß**
die im Datenspeicher (M) gespeicherten Daten an einem im Kraftfahrzeug befindlichen Display (D) darstellbar und/oder von einem externen Diagnosesystem abrufbar sind.

## Claims

1. Display method having a display device for motor vehicles which displays information about the status of different devices of the motor vehicle, an indication display (H) being issued when status limiting values are reached, **characterized in that**, at the time when a status limiting value is reached, information which is assigned to the indication display (H) is stored together with the kilometre reading and is displayed when necessary.

2. Display method according to Claim 1, **characterized in that** the time (time of day, date) when a status limiting value is reached is stored in relation to the associated indication display (H) and is displayed when necessary.

3. Display method according to one of Claims 1 or 2, **characterized in that** the kilometres which have been travelled since a status limiting value has been reached are displayed.

4. Display method according to one of the preceding claims, **characterized in that** a break lining limiting value and/or a tank reserve value and/or a minimum value for the power consumption of electrical loads are monitored as the status limiting values.

5. Display method according to one of the preceding claims, **characterized in that** information which refers to a necessary repair or any other remedying measure is issued in relation to the indication display (H).

6. Display method according to one of the preceding claims, **characterized in that** the time and/or the kilometre reading relating to a remedying measure which is carried out in response to an indication display (H) are recorded.

7. Display device for carrying out the method according to one of the preceding claims, having a monitoring device (1) which monitors the status of the different devices by means of sensors (S1 to Sn) and indicates, in the form of a corresponding indication display (H), when status limiting values have been reached, **characterized in that** the monitoring device (1) is connected to a data memory (M) which, when a status limiting value has been reached, stores the current kilometre reading in assignment to the indication display (H).

8. Display device according to Claim 7, **characterized in that** the data memory (M) stores, in assignment to the indication display (H), further characteristic data which is present at the time when the status limiting value is reached.

9. Display device according to one of Claims 7 or 8, **characterized in that** the data which is stored in the data memory (M) can be represented on a display (D) which is located in the motor vehicle and/or can be called by an external diagnostic system.

## Revendications

1. Procédé d'affichage avec un dispositif d'affichage pour véhicules automobiles, lequel affiche des informations sur l'état de différents dispositifs du véhicule automobile, un affichage d'indication (H) s'effectuant lors de l'atteinte de valeurs limites d'état,
**caractérisé en ce qu'**
une information associée à l'affichage d'indication (H) est mémorisée conjointement avec l'état kilométrique au moment de l'atteinte d'une valeur limite d'état et est affichée au besoin.

2. Procédé d'affichage selon la revendication 1,
**caractérisé en ce que**
le moment (heure, date) de l'atteinte d'une valeur limite d'état est mémorisé dans l'affichage d'indication associé (H) et affiché au besoin.

3. Procédé d'affichage selon l'une quelconque des revendications 1 ou 2,
**caractérisé en ce que**
les kilomètres parcourus depuis l'atteinte d'une valeur limite d'état sont affichés.

4. Procédé d'affichage selon l'une quelconque des revendications précédentes,
**caractérisé en ce qu'**
une valeur limite de garniture de frein et/ou une valeur de réserve de réservoir et/ou une valeur minimale pour la consommation en courant par les consommateurs électriques sont surveillées en tant que valeurs limites d'état.

5. Procédé d'affichage selon l'une quelconque des revendications précédentes,
**caractérisé en ce qu'**
une information est donnée à l'affichage d'indication (H), laquelle indique une réparation nécessaire ou autre mesure d'aide.

6. Procédé d'affichage selon l'une quelconque des revendications précédentes,
**caractérisé en ce que**
le moment et/ou l'état kilométrique sont maintenus à une mesure d'aide effectuée sur un affichage d'indication (H).

7. Dispositif d'indication en vue de la réalisation du procédé selon l'une quelconque des revendications précédentes, avec un dispositif de surveillance (1) qui surveille les états de différents dispositifs au moyen de capteurs (S1 à Sn) et affiche l'atteinte de valeurs limites d'état sous la forme d'un affichage d'indication correspondant (H), **caractérisé en ce que**
le dispositif de surveillance (1) est relié à une mémoire de données (M) qui mémorise lors de l'atteinte d'une valeur limite d'état l'état kilométrique réel associé à l'affichage d'indication (H).

8. Dispositif d'affichage selon la revendication 7,
**caractérisé en ce que**
la mémoire de données (M) associée à l'affichage d'indication (H) mémorise d'autres données caractéristiques présentes au moment de l'atteinte de la valeur limite d'état.

9. Dispositif d'affichage selon l'une quelconque des revendications 7 ou 8,
**caractérisé en ce que**
les données mémorisées dans la mémoire de données (M) peuvent être représentées sur un écran (D) se trouvant dans le véhicule automobile et/ou consultées à partir d'un système de diagnostic externe.
